# FASCICULE DE BREVET EUROPEEN

(11) **EP 3 052 860 B1**
(45) Date de publication et mention de la délivrance du brevet: **06.12.2017**
(21) Numéro de dépôt: 13785518.5
(22) Date de dépôt: 02.10.2013
(51) Int. Cl.: F23C 99/00, F23D 14/22, F27B 13/02, F27B 13/12

(54) **PROCEDE D'INJECTION DE COMBUSTIBLE GAZEUX DANS UN FOUR A CHAMBRES A FEU(X) TOURNANT(S)**
INJECTION PROCESS OF GASEOUS FUEL IN A RING FURNACE
VERFAHREN ZUR GASKRAFTSTOFFEINSPRITZUNG FÜR EINEN RINGKAMMEROFEN

(43) Date de publication de la demande: 10.08.2016
(73) Titulaire: Fives Solios, 78231 Le Pecq (FR)
(72) Inventeur: MAHIEU, Pierre, F-69702 GIVORS cedex (FR)
(74) Mandataire: Cabinet Plasseraud
(86) Numéro de dépôt international: PCT/FR2013/052349
(87) Numéro de publication internationale: WO 2015/049428

(56) Documents cités:
- WO-A1-2006/133880
- WO-A1-2011/027042
- CN-Y- 2 937 979

## Description

### DOMAINE TECHNIQUE DE L'INVENTION

L'invention concerne le domaine des fours à chambres destinés à la cuisson de blocs carbonés, plus particulièrement d'anodes ou de cathodes en carbone destinées à la production par électrolyse de l'aluminium. Elle a plus particulièrement pour objet un procédé d'injection de combustible gazeux permettant d'obtenir une combustion à faible émission de NOx et faible dispersion thermique.

On désigne par bloc carboné, tout produit obtenu par mise en forme d'une pâte carbonée, et destiné, après cuisson, à être utilisé dans des fours d'électrométallurgie.

On désigne par combustible gazeux, tous les types de gaz utilisés dans l'industrie, et plus particulièrement le gaz naturel.

Par exemple, les anodes carbonées destinées aux cuves de production d'aluminium par électrolyse d'alumine dissoute dans de la cryolithe fondue sont obtenues par mise en forme d'une pâte carbonée résultant du malaxage à chaud d'un mélange de brai et de coke broyé. Après mise en forme, les anodes sont cuites pendant une centaine d'heures à une température de l'ordre de 1100°C à 1200°C.

La majeure partie des installations de cuisson en service dans le monde sont de type « four à chambre » dit également four « à feu tournant » ou encore « à avancement de feu ». Ces fours se divisent eux-mêmes en deux catégories, les fours fermés et les fours dits à « chambres ouvertes » qui sont les plus utilisés, décrits notamment dans la demande de brevet WO201127042, à laquelle on se reportera pour davantage de précisions sur la structure et le fonctionnement de ces fours, et qui est incorporée dans la présente demande par voie de référence.

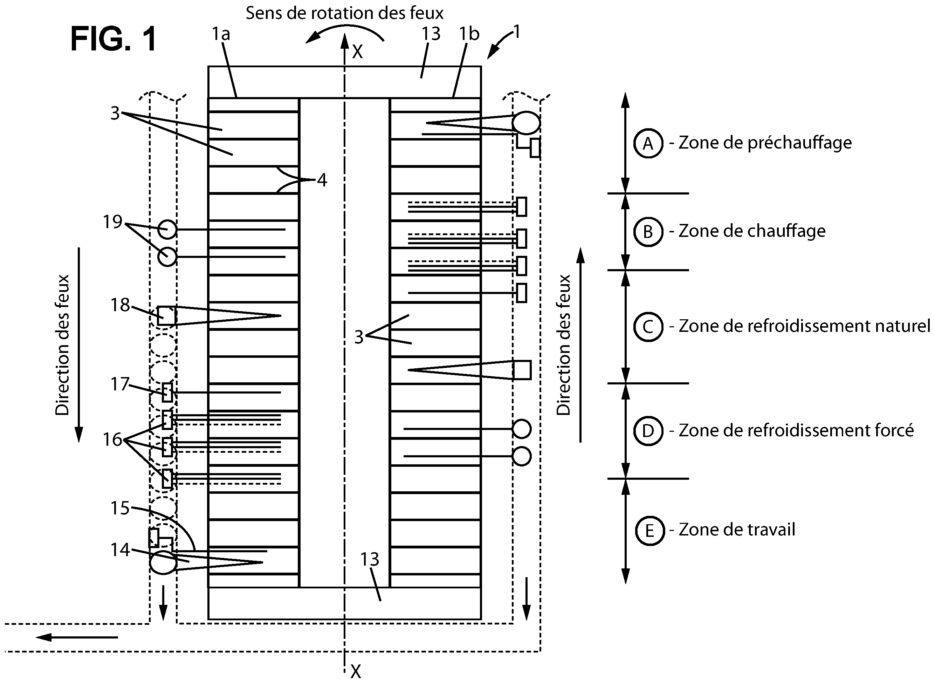

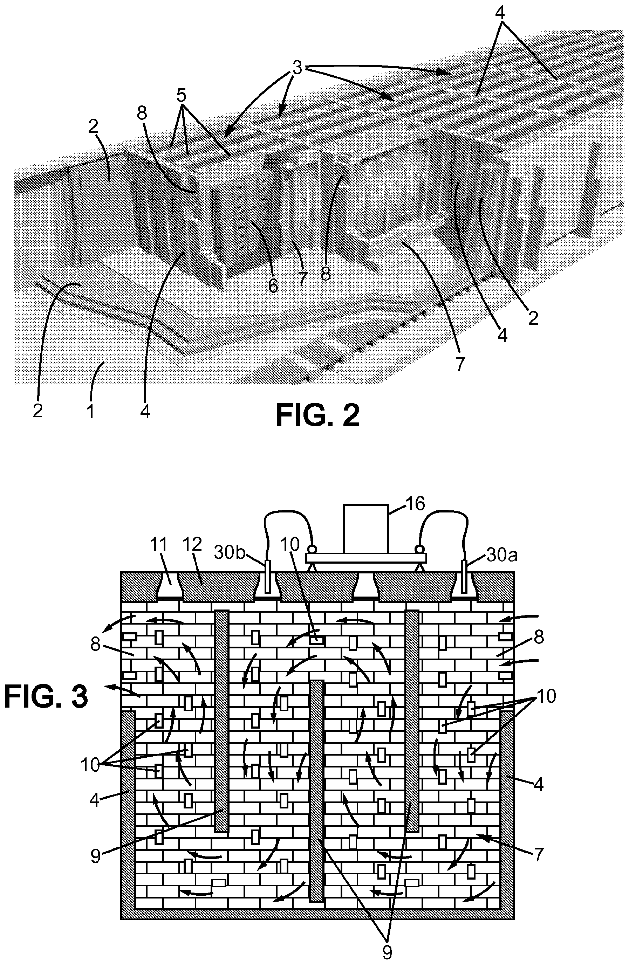

La présente invention s'applique plus particulièrement aux fours à chambres ouvertes, dont une réalisation selon l'état de la technique est schématiquement représentée sur les figures 1 à 3 annexées. Ce type de four 1 comporte deux cuvelages 1a et 1b parallèles (voir Fig. 1 qui est une vue schématique en plan de la structure d'un four à deux feux tournants et chambres ouvertes) dont la longueur totale peut atteindre plus d'une centaine de mètres. Comme représenté en Fig. 2, chaque cuvelage 1a ou 1b comporte une succession de chambres 3, séparées par des murs transversaux 4, entre et sur des parois réfractaires longitudinales 2 intégrées dans les murs latéraux et la base des cuvelages 1a et 1b du four 1. Chaque chambre 3 comporte, disposées parallèlement au grand axe XX du four 1, un ensemble de cloisons creuses 7, à parois réfractaires minces, dans lesquelles vont circuler les gaz chauds assurant la cuisson, ces cloisons 7 alternant avec des alvéoles 5, ouvertes à leur partie supérieure pour permettre le chargement des blocs carbonés 6 crus et le déchargement des blocs 6 cuits après refroidissement. Les blocs 6 à cuire sont enveloppés dans une poussière carbonée (coke, anthracite ou résidus carbonés broyés ou tout autre matériau de garnissage pulvérulent) qui permet d'assurer le transfert thermique par conduction entre chaque bloc 6 et le mur réfractaire, tout en autorisant le dégazage des volatils du brai. Il y a par exemple huit alvéoles et neuf cloisons creuses 7 alternées par chambre 3.

Comme représenté en Fig. 3, qui est une coupe longitudinale schématique d'une cloison creuse 7, les cloisons creuses 7 sont munies, à leur partie supérieure, d'ouvertures 11, dites "ouvreaux", ménagées dans une paroi réfractaire supérieure 12, et obturables par des couvercles amovibles. Les cloisons 7 comportent en outre des chicanes 9 verticales réfractaires pour allonger et répartir plus uniformément le trajet des gaz de combustion et une série d'entretoises 10 entre les deux parois réfractaires latérales des cloisons 7 pour en assurer la tenue mécanique.

Les cloisons creuses 7 successives d'un même cuvelage 1a ou 1b du four 1 sont en communication l'une avec l'autre par des lucarnes 8 positionnées en leur partie supérieure et qui permettent le transfert des gaz le long du cuvelage 1a ou 1b.

Dans chaque cuvelage 1a ou 1b, les cloisons creuses 7 sont ainsi alignées en plusieurs lignes de cloisons 7 parallèles à l'axe longitudinal XX du four 1, et en alternance avec des alvéoles 5, dans le sens transversal du four 1.

Les deux cuvelages 1a et 1b du four 1 sont mis en communication en leurs extrémités longitudinales par des carneaux de virage 13, qui permettent de transférer les fluides gazeux d'une extrémité à l'autre (voir Fig. 1).

Le chauffage du four 1 est assuré par un ensemble de rampes de chauffe 16, typiquement au nombre de 3 par feu, ayant une longueur égale à la largeur des chambres 3, et équipées d'injecteurs 30 qui viennent se placer dans les ouvreaux 11 des chambres 3 concernées. Il y a typiquement deux injecteurs 30 par cloison creuse 7, un injecteur amont 30a et un injecteur aval 30b relativement au sens de circulation des fumées indiqué par des flèches (voir Fig. 3), ce qui représente un total de six injecteurs 30 par ligne de cloisons 7. En amont des injecteurs 30 des rampes de chauffe 16 (par rapport au sens d'avancement des gaz), on dispose d'une ou plusieurs pipes de refroidissement 19 et d'une pipe de soufflage d'air 18 de combustion et, en aval des rampes 16, d'une pipe d'aspiration 14 des gaz brûlés. Le chauffage est assuré à la fois par la combustion du combustible gazeux injecté par les injecteurs 30 et par la combustion des vapeurs de brai émises par les blocs carbonés 6 en cours de cuisson.

Au fur et à mesure que la cuisson se produit, on fait avancer, par exemple toutes les 24 heures, l'ensemble constitué des pipe(s) de refroidissement 19 - pipe de soufflage 18 - rampes de chauffe 16 - pipe d'aspiration 14, ainsi que d'une rampe de mesure de préchauffage 15, équipée de capteurs de pression et température pour mesurer ces grandeurs dans les cloisons creuses 7 de la chambre 3 sous la pipe d'aspiration 14, et d'une rampe dite « de point zéro » équipée de capteurs de pression, en amont des rampes de chauffe 16 pour mesurer la pression statique dans les cloisons 7, cet ensemble étant également désigné sous le terme « feu ». Chaque chambre 3 assure ainsi, successivement, les fonctions de chargement des blocs carbonés 6 crus, préchauffage naturel (par les gaz de combustion dans la zone de préchauffage A), chauffage forcé (zone dite plein feu dans la zone de chauffage B), refroidissement des blocs carbonés 6 (et préchauffage des gaz de combustion dans la zone de refroidissement naturel C), refroidissement forcé des blocs carbonés 6 (dans la zone D) et déchargement des blocs carbonés 6 cuits, et réparations éventuelles (dans la zone de travail E) et reprise d'un nouveau cycle (voir Fig. 1).

### PROBLEME TECHNIQUE A RESOUDRE

L'injection de combustible gazeux par les rampes de chauffage 16 est réalisée par impulsions depuis le sommet des cloisons creuses 7 à travers des ouvreaux 11. Le gaz injecté s'enflamme au contact des gaz chauds circulant dans les cloisons 7. Typiquement, l'injection du combustible gazeux s'effectue à « co-courant », c'est-à-dire dans la direction d'écoulement des gaz chauds circulant dans les cloisons 7 reliées en lignes de cloisons 7. Selon le positionnement des injecteurs 30 dans le cycle de cuisson, le débit des gaz chauds et leur teneur en oxygène varient.

Le contrôle de la puissance thermique injectée s'effectue par impulsions d'ouverture de chaque injecteur 30, dont la fréquence dépend du débit nominal en combustible gazeux et de la puissance thermique à injecter. Typiquement, le temps d'ouverture de la vanne d'un injecteur 30 à chaque injection est fixe (paramètre réglable de 0.5 s à plusieurs secondes) et le système régule la puissance globale en ajustant le temps de fermeture entre 2 injections successives. Il existe également des systèmes dont la régulation de puissance s'effectue par variation du temps d'ouverture à période fixe (temps d'ouverture + temps de fermeture=constante).

La canne d'injection de chaque injecteur 30 peut se limiter à un monotube avec une restriction calibrée en amont pour l'ajustement du débit nominal. Dans les systèmes les plus récents, un tube principal d'injection est lui-même inséré dans un tube extérieur pour la tenue en température et pour favoriser un passage d'air induit autour du tube principal. L'air induit sert à souffler la flamme en fin d'injection et à refroidir le tube principal.

La flamme qui résulte de l'injection directe de combustible dans un flux gazeux, dite « flamme de diffusion », a un impact sur la formation des oxydes d'azote (NOx) mais aussi sur la distribution thermique le long des parois réfractaires des lignes de cloisons creuses 7. Cette distribution thermique influence directement l'homogénéité de cuisson des anodes et la durée de vie des parois réfractaires.

La plupart des exploitants de fours à chambres destinés à la cuisson de bloc carbonés sont confrontés, avec la technologie existante, à des problèmes d'émissions d'oxydes d'azote dans les fumées de combustion supérieures aux réglementations en vigueur. La technologie existante favorise notamment l'injection de combustible gazeux à grande vitesse (supérieure à 200 m/s) afin prétendument de chauffer les cloisons sur toute leur hauteur.

Les oxydes d'azote ont une influence néfaste à la fois sur l'être humain et sur l'environnement. En effet, ils forment une combinaison de gaz irritants à la source de maladies respiratoires. D'autre part, au contact de l'atmosphère, ils peuvent former progressivement des pluies acides. Enfin, ils engendrent une pollution photochimique, l'ozone dite « troposphérique » qui se forme en combinaison avec les composés organiques volatils et le rayonnement solaire.

Les normes en vigueur fixant les limites d'émission de NOx deviennent de plus en plus exigeantes. En conséquence, les exploitants de fours, et en particulier de fours à chambres destinés à la cuisson de blocs carbonés, se préoccupent de limiter au maximum les émissions de NOx, de préférence à un taux inférieur à 300 mg/Nm3 et idéalement inférieur à 100 mg/Nm3 pour les installations alimentées au gaz naturel.

Les paramètres qui influent sur la formation des NOx sont connus. Il s'agit principalement de la température et de la concentration en oxygène dans l'air comburant ou encore de la concentration en azote moléculaire combiné au combustible.

De nombreuses techniques ont déjà été proposées pour réduire l'émission des NOx. Les techniques dites « secondaires » consistent à réduire par voie chimique le NOx déjà formé par adjonction d'un agent réducteur, par exemple de l'ammoniac, en sortie de procédé. Ces techniques sont efficaces mais coûteuses et techniquement difficilement applicables aux rejets de fours à chambres pour la cuisson des blocs carbonés.

Les techniques dites « primaires » sont ainsi appelées car on ne cherche pas à détruire les NOx déjà formés, mais plutôt à empêcher leur formation en intervenant sur la combustion, par exemple au niveau de la flamme. Ces techniques sont en outre plus simples à mettre en oeuvre, et par conséquent, plus économiques. Ces mesures primaires constituent un préalable indispensable à la réduction des NOx dans la plupart des procédés de combustion.

On compte parmi les techniques d'abattement primaires, deux catégories principales :
- une première catégorie qui consiste à réduire la concentration en oxygène dans la chambre de combustion d'un four en recirculant une partie des fumées de la sortie à l'entrée de la chambre de combustion, technique dite de « reburning ». Cette technique est difficilement applicable aux fours à chambres dans lesquels les gaz s'écoulent par dépression sur de très grandes distances.
- une deuxième catégorie qui consiste à agir directement sur la flamme en cherchant soit à réduire l'excès d'air de combustion, soit à limiter les pics de température.

La première solution ne peut s'appliquer simplement dans le cas des fours à chambres dans la mesure où le comburant, qui chemine dans les cloisons creuses indépendamment de l'injection du combustible, est difficilement contrôlable. La deuxième solution est applicable aux flammes de diffusion produites dans les fours à chambres par augmentation du volume du front de flamme ou par augmentation du temps de résidence du combustible dans la zone comburante.

L'invention a pour objet un procédé d'injection de combustible gazeux qui permet la formation d'une flamme de diffusion plus étalée dans le volume de l'enceinte réfractaire d'une cloison creuse, qui ne présente quasiment pas de pics de température, et qui, de ce fait, contribue à réduire significativement la formation de NOx et améliore l'homogénéité en température de la cloison creuse.

### BREVE DESCRIPTION DE L'INVENTION

L'invention consiste principalement en un procédé d'injection pulsée de combustible gazeux au moyen d'au moins un injecteur à au moins un orifice de sortie apte à délivrer au moins un jet de combustible gazeux, et placé dans un ouvreau correspondant dans au moins une cloison creuse d'un four à chambres du type dit "à feu tournant" destiné à la cuisson de blocs carbonés, caractérisé en ce qu'on donne à la vitesse moyenne dudit combustible gazeux audit au moins un orifice de sortie dudit au moins un injecteur une valeur comprise entre 5 m/s et 80 m/s dans l'axe dudit au moins un jet.

Avantageusement ladite vitesse moyenne dudit combustible gazeux est comprise entre 10 m/s et 50 m/s dans l'axe dudit au moins un jet.

Nous avons en effet déterminé que la limitation de la vitesse de pénétration du combustible gazeux dans le flux comburant permet, par abaissement de la turbulence du jet, de limiter la vitesse de réaction entre les molécules de carbone et d'oxygène (vitesse de combustion), et par conséquent d'obtenir une flamme plus longue, plus étagée et moins génératrice de NOx.

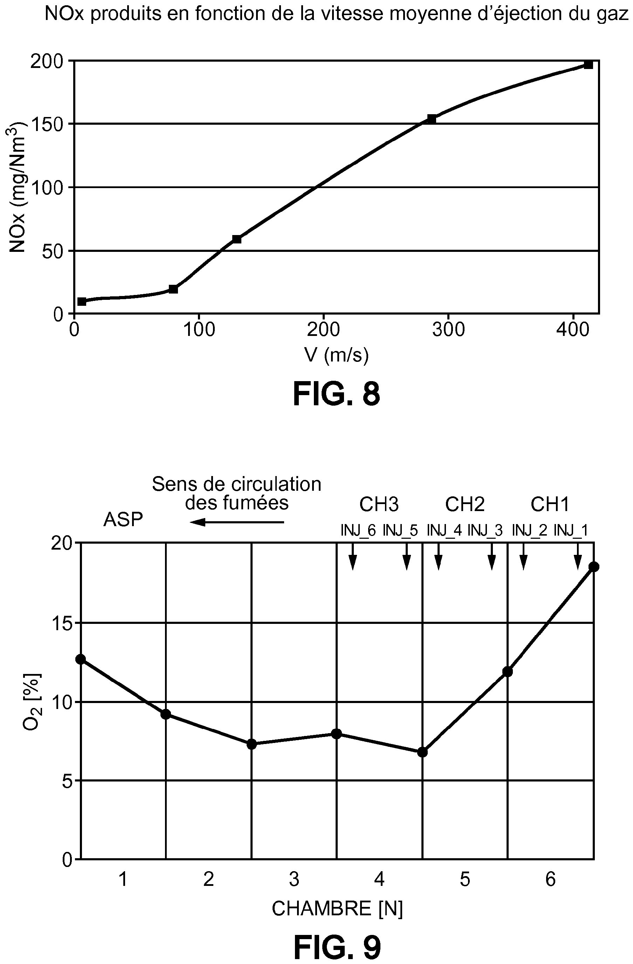

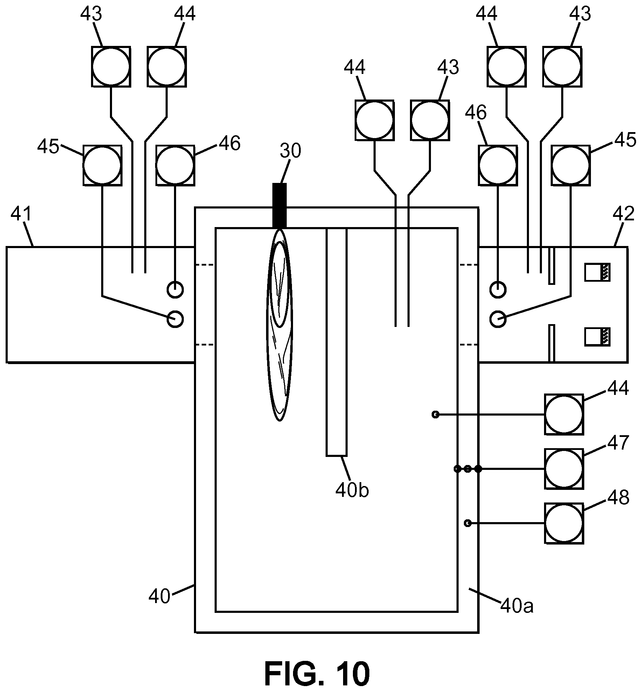

Nous avons déterminé, par expérimentation dans une chambre d'essais telle que décrite ci-après en référence à la Fig. 10 que la production de NOx est faible et relativement constante pour des vitesses d'éjection du combustible gazeux inférieures à 80 m/s, et est multipliée par 4 entre 80 m/s et 160 m/s (voir Fig. 8).

Le procédé de l'invention permet ainsi le développement d'une flamme plus longue, plus homogène avec un effet bénéfique sur la distribution thermique le long des parois réfractaires des cloisons creuses et par conséquent sur l'homogénéité de cuisson des blocs carbonés.

Le procédé de l'invention permet également l'augmentation de la durée de vie des parois réfractaires des cloisons creuses grâce à la réduction des pics de température dans la flamme.

Un avantage supplémentaire du procédé d'injection à faible vitesse selon l'invention est qu'il peut être mis en oeuvre avec des injecteurs présentant les formes géométriques suivantes, connues dans l'art antérieur, afin de renforcer les propriétés des flammes issues de jets de combustible gazeux à faible vitesse, concernant la faible émission de NOx et l'homogénéité des températures le long des parois réfractaires des cloisons creuses
- injecteurs à chambre(s) de précession pour favoriser les recirculations à grandes échelles dans la flamme ;
- injecteurs à jets multiples orientés le long des parois réfractaires afin de favoriser les échanges pariétaux ;
- injecteurs à jets multiples afin de réaliser un étagement de flamme par dilution des produits de combustion ; et
- injecteurs à jets plats pour favoriser les échanges par convection le long des parois réfractaires.

Avantageusement, de plus, le rapport du débit instantané Qg dudit combustible gazeux à un volume V de ladite au moins une cloison creuse situé à l'aplomb d'un injecteur et compris entre la base dudit ouvreau correspondant et la base d'une lucarne de passage des gaz de ladite cloison creuse est compris entre 65 et 130 Nm3/h/m3.

En outre, le procédé est avantageusement tel que le volume dudit combustible gazeux injecté lors d'une impulsion d'ouverture dudit au moins un injecteur conduit, en début d'impulsion, à une saturation en combustible gazeux et une combustion incomplète dans une zone de mélange de combustible gazeux et comburant par manque d'oxygène.

Avantageusement encore, le procédé selon l'invention est tel que ladite combustion est rendue incomplète de sorte à conduire à la formation de suies carbonées. En effet, ces suies carbonées, par rayonnement à haute température, rendent la flamme plus lumineuse et plus « froide », avec le double avantage de limiter la formation des NOx et d'optimiser les échanges thermiques avec les parois réfractaires des cloisons creuses.

Le procédé d'injection pulsée de l'invention est avantageusement de plus tel que la durée d'une impulsion d'ouverture en secondes d'au moins un injecteur est définie par la formule (1) : dp = (VT/X)x (O₂%/20%)x(3600 /(Qg x Vaₒ)), dans laquelle VT est le volume d'une travée d'injection d'un injecteur dans ladite cloison creuse, X représente un coefficient de réduction dudit volume de ladite travée d'injection pour définir un volume (VT/X) dans ladite travée d'injectionque l'on souhaite saturer en combustible gazeux, (O₂%) est le taux d'oxygène du volume comburant entrant dans ladite cloison creuse, et Vaₒ est le pouvoir comburivore dudit combustible gazeux, Qg étant le débit nominal de l'injecteur.

De plus, selon l'invention, ladite durée d'impulsion d'ouverture dp d'au moins un injecteur peut être fixée, pour chaque rampe de chauffage et pour chaque cloison creuse dudit four en fonction de la position dudit injecteur dans la zone de chauffage forcé dudit four, de façon à adapter le profil de flamme en fonction du taux d'oxygène contenu dans le volume de la travée d'injection et favoriser la limitation des NOx. Le taux d'oxygène moyen pour chaque chambre du four en zone de chauffage forcé, et idéalement pour chaque injecteur, est déterminé en fonction des débits nominaux de combustible gazeux injecté, des débits des fumées circulant dans les cloisons creuses et des débits d'air entrant par infiltration. Selon le procédé de l'invention, la durée maximale d'impulsion d'ouverture d'au moins un injecteur, et de préférence de chacun d'eux, peut être définie par un seuil admissible de concentration en CO en sortie de ladite cloison creuse. Ce seuil est, avantageusement, de 30 ppm.

L'invention consiste, mises à part les dispositions exposées ci-dessus, en un certain nombre d'autres dispositions dont il sera plus explicitement question ci- après à propos d'exemples de réalisation, décrits avec référence aux dessins annexés, mais qui ne sont nullement limitatifs.

### BREVE DESCRIPTION DES DESSINS

Les figures 1 à 3 ont été décrites précédemment, au titre de l'état de la technique, à savoir :
- la Fig.1 est une vue schématisée en plan de la structure d'un four à deux feux tournants et chambres ouvertes ;
- la Fig.2 est une vue schématisée partielle en perspective et coupe transversale avec arrachement représentant la structure interne du four de la Fig. 1 ;
- la Fig.3 est une coupe longitudinale schématique d'une cloison creuse du four des figures 1 et 2 ;
- la Fig.4 est similaire à la Fig.3 et illustre l'écoulement du combustible gazeux sous un injecteur et celui du comburant en entrée de cloison creuse; ainsi que l'écoulement des gaz et fumées de combustion au travers de la cloison creuse ;
- la Fig.5 est similaire à la Fig.4 et illustre la zone de mélange intensif entre le combustible gazeux et le comburant, et un volume représentatif de la taille de la cloison réfractaire dans lequel a lieu le mélange primaire du combustible gazeux et du comburant.
- la Fig.6 est un diagramme illustrant de manière simplifiée l'écoulement du jet de combustible gazeux;
- la Fig.7 est similaire aux Fig. 4 et 5 et illustre schématiquement un volume de la travée d'injection dans la cloison creuse et saturé en combustible sous l'injecteur ;
- la Fig.8 est un diagramme illustrant de manière simplifiée l'évolution de la formation de NOx en fonction de la vitesse moyenne du combustible gazeux à l'orifice de sortie d'un injecteur ;
- la Fig.9 est un diagramme illustrant de manière simplifiée l'évolution de la concentration en oxygène dans différentes chambres, entre la rampe de chauffe amont et la pipe d'aspiration des gaz brûlés ou fumées de combustion, et
- la Fig.10 est une vue schématique partielle, en coupe verticale d'un banc d'essais avec chambre d'essai d'injecteur, pour simuler et caractériser les conditions d'injection d'un combustible gazeux dans une cloison creuse, et obtenir une flamme plus longue, plus étagée et moins génératrice de NOx par le procédé de l'invention.

### DESCRIPTION DETAILLEE DE L'INVENTION

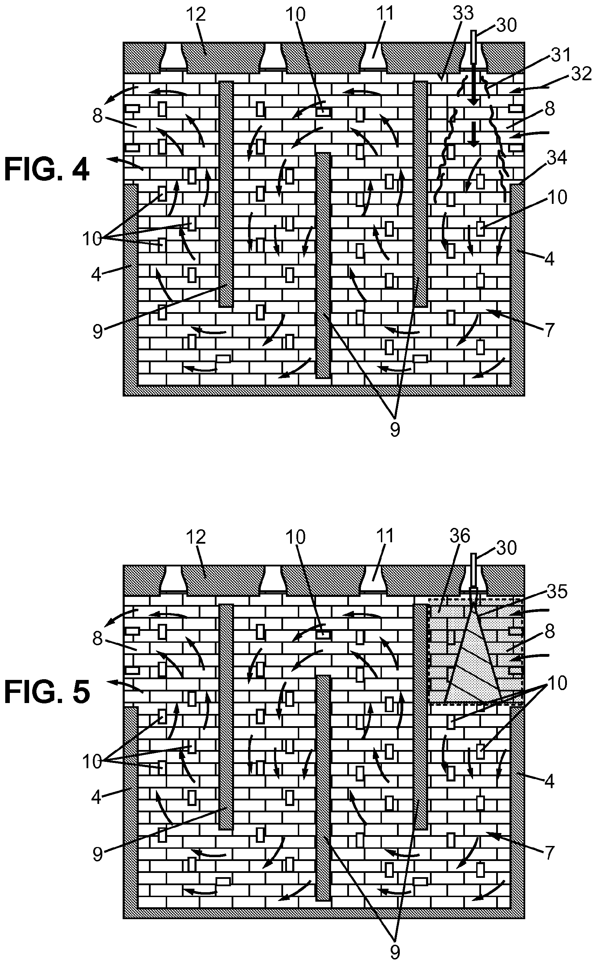

Sur la figure 4 est schématiquement représenté un flux (illustré par des flèches en traits fins) de gaz comburant 32 entrant par une lucarne 8 dans une cloison creuse 7 d'une chambre 3 située sous une rampe de chauffe 16 du four 1, avec, dans l'ouvreau 11 le plus proche de la lucarne 8 d'entrée, un injecteur 30 ayant, dans cet exemple, un seul orifice d'injection, qui correspond à l'injecteur amont 30a de la figure 3, un injecteur aval 30 identique, non représenté sur la figure 4, étant également reçu dans le troisième ouvreau 11 dans le sens de la circulation des flux gazeux dans la cloison creuse 7, comme indiqué par les flèches en traits fins. Sous l'injecteur 30, l'écoulement du combustible gazeux 31 schématisé en un unique jet d'axe vertical est illustré par des flèches en traits épais. La vitesse du jet de combustible gazeux 31 est la plus importante dans l'axe vertical de l'orifice de sortie de l'injecteur 30 et du jet 31, et décroit en suite rapidement, à mesure que ce jet 31 se propage de haut en bas et diverge dans le flux de gaz comburant 32, qui entrant par la lucarne 8, circule de haut en bas dans la travée d'injection délimitée, pour cet injecteur 30, de la base de l'ouvreau 11, ou face inférieure de la paroi supérieure 12, jusqu'à la base de la cloison creuse 7, entre le mur transversal 4 dans lequel est ménagée la lucarne 8 d'entrée et la chicane 9 verticale adjacente.

A noter également que, dans un plan de coupe perpendiculaire à l'axe vertical du jet de combustible gazeux 31, la vitesse du jet, maximale au niveau de son axe vertical, diminue progressivement et rapidement quand on s'éloigne de l'axe vers les bords d'une zone 35 (voir fig.5) de mélange intensif du combustible gazeux avec le gaz comburant, dans un écoulement en jet turbulent en co-courant, du fait que le jet du combustible gazeux 31 et le flux de gaz comburant 32 sont orientés, dans la travée d'injection, dans le même sens, de haut en bas.

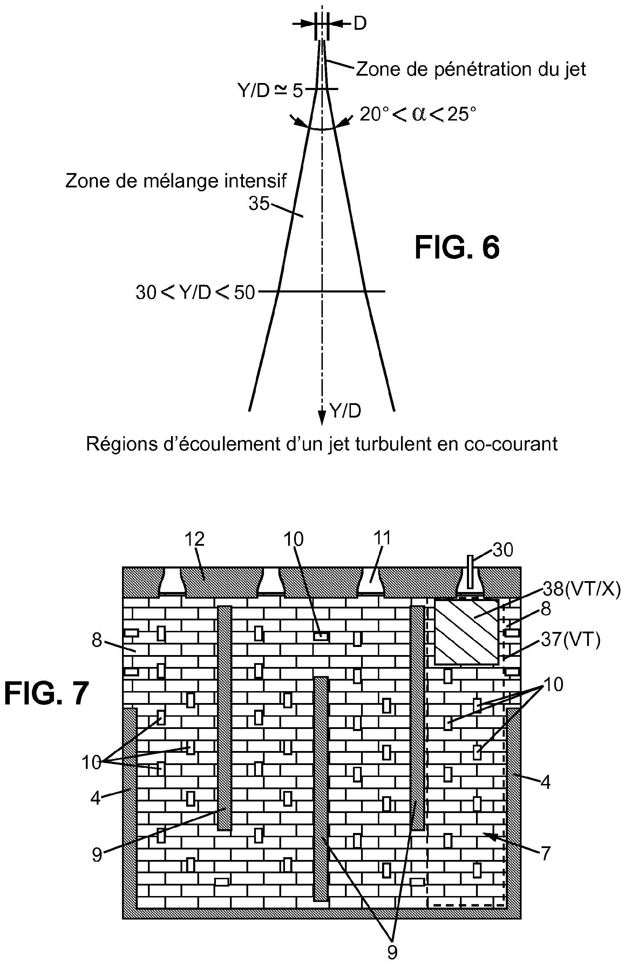

Sur la figure 5 est schématiquement représentée la zone 35 de mélange intensif du gaz comburant et du combustible gazeux, cette zone 35 ayant, en coupe verticale, la forme d'un triangle sensiblement isocèle centré sur l'axe vertical du jet 31, comme plus précisément décrit ci-après en référence à la figure 6, dans un volume 36 à la partie supérieure de la travée d'injection correspondante qui est un volume représentatif de la taille de la cloison réfractaire dans lequel a lieu le mélange primaire du combustible gazeux et du comburant et qui est compris, sous l'injecteur 30, entre la base 33 de l'ouvreau 11 logeant l'injecteur 30, et la base 34 de la lucarne 8 d'entrée du flux comburant 32, ce volume 36 étant délimité sur la figure 5, par des tirets.

La figure 6 représente, sous forme de diagramme, les régions d'écoulement d'un jet turbulent en co-courant délivré par l'injecteur 30, lorsque ce dernier est commandé par une impulsion d'ouverture. En abscisse, selon l'axe vertical et central du jet de combustible gazeux 31, on indique le rapport de la distance Y à partir de l'orifice de sortie de l'injecteur 30 et vers l'intérieur de la cloison creuse 7, au diamètre D de l'orifice de sortie de l'injecteur 30, illustré en haut du diagramme de la figure 6. Après une zone de pénétration du jet de combustible gazeux 31 faiblement divergeant, sur une distance d'environ 5 fois le diamètre D, commence la zone 35 de mélange intensif du gaz comburant et du combustible gazeux, sur une distance comprise entre, environ, 5 fois et de 30 à 50 fois le diamètre D de l'orifice de sortie de l'injecteur 30. Dans cette zone 35 le jet turbulent est davantage divergeant, d'un angle α compris entre 20° et 25°. Cette zone 35 de mélange intensif et de saturation en combustible gazeux, est centrale dans le volume V 36 et est obtenue par une injection du combustible gazeux avec une vitesse moyenne à l'orifice de sortie de l'injecteur 30 qui est comprise entre 5 et 80 m/s dans l'axe du jet 31, et avantageusement entre 10 et 50 m/s, et avec un rapport du débit instantané Qg de combustible gazeux, qui est généralement le débit nominal de l'injecteur 30, au volume V 36 à l'aplomb de l'injecteur 30, dans la travée d'injection correspondante de la cloison creuse 7, qui est un rapport dont la valeur est comprise entre 65 et 130 Nm³/h/m³.

Ainsi, selon l'invention, le volume occupé par le front de flamme, défini lui-même comme la zone de mélange intensif 35 du combustible gazeux et du gaz comburant, correspond approximativement, pour un jet turbulent en co-courant et pour un diamètre D d'injecteur 30 standard, au tiers du volume V 36 de la cloison creuse 7, situé à l'aplomb de l'injecteur 30.

Un autre exemple de détermination, dans la cloison creuse 7, d'un volume à saturer en combustible gazeux, injecté lors d'une impulsion d'ouverture d'un injecteur 30, par exemple l'injecteur amont tel que 30a de la figure 3, pour conduire à une combustion incomplète, par manque d'oxygène, dans ce volume de mélange du combustible gazeux et du gaz comburant, est à présent décrit en référence à la figure 7, sur laquelle est schématiquement représenté par un rectangle hachuré 38 un volume VT/X. Ce volume VT/X 38 correspond à une subdivision du volume VT, indiqué en pointillé sur la figure 7, de la travée d'injection 37 correspondante et représente le volume de la cloison creuse 7 qui est situé à l'aplomb de l'injecteur 30 et compris entre la base 33 de l'ouvreau 11 recevant cet injecteur 30, et le fond de la cloison, dans le cas d'un injecteur amont tel que 30a de la figure 3, et est le même volume que celui de la travée d'injection d'un injecteur aval tel que 30b de la figure 3, laquelle travée d'injection est délimitée entre 2 chicanes verticales 9 adjacentes et parcourue par un flux gazeux descendant, pour que l'injecteur correspondant induise un jet turbulent à co-courant. X représente un coefficient de réduction ou subdivision de ce volume VT de la travée d'injection 37 pour définir un volume VT/X 38 en partie haute de cette travée d'injection 37, et que l'on souhaite saturer en combustible gazeux, X étant typiquement compris 5 et 10.

Dans les deux exemples de réalisation des figures 5 et 7, la création d'un volume saturé en combustible gazeux tel que 35 de la figure 5 et 38 de la figure 7, et donc appauvri en oxygène, permet la réduction des NOx.

La figure 8 est un graphique représentant l'évolution de la concentration en NOx dans les fumées de combustion, en fonction de la vitesse moyenne d'éjection du combustible gazeux en sortie d'un injecteur 30. Cette courbe est continument croissante, tout d'abord, pour de faibles vitesses d'injection, à partir d'une faible valeur de NOx (exprimée en mg/Nm³), avec une pente faible, et présente un point d'inflexion de la courbe se situant au voisinage d'une vitesse de 80 m/s, au-delà de laquelle la formation de NOx augmente rapidement.

En-dessous de cette vitesse de 80 m/s, un second point d'inflexion, beaucoup moins marqué, se situe au voisinage de 50 m/s. Pour cette raison, selon l'invention, la vitesse moyenne d'éjection du combustible gazeux par les injecteurs 30 est maintenue avantageusement inférieure ou égale à 50 m/s, par exemple comprise entre 10 et 50 m/s.

La figure 9 est un graphique représentant l'évolution moyenne de la teneur en oxygène O₂ (%) dans une ligne de cloisons creuses 7 en communication successive les unes avec les autres et appartenant à six chambres 3 successives du four 1, le numéro N des chambres étant indiqué en abscisse sur la figure 9, tandis que le taux d'oxygène O₂ est indiqué en ordonnée (entre 0 et 20%), les 6 cloisons creuses 7 en succession s'étendant depuis la chambre 3 en-dessous de la première rampe de chauffe 16, la plus en amont par rapport au sens d'écoulement des flux gazeux, repérée en CH1 sur la figure 9, c'est-à-dire la 6^{ème} chambre 3, jusqu'à la cloison creuse 7 de la première chambre 3, en-dessous de la pipe d'aspiration 14 des gaz brûlés, repérée en ASP, le sens de circulation des fumées de combustion étant indiqué de la chambre 3 CH1 sous la rampe de chauffe 16 en amont, à la chambre 3 d'aspiration ASP sous la pipe d'aspiration 14. En amont du premier injecteur, ou injecteur amont 30a, identifié INJ 1 de la cloison creuse 7 de la chambre amont CH1, la teneur en oxygène O₂ est proche de 20%, et se réduit sensiblement régulièrement jusqu'à une teneur légèrement supérieure à 5% à l'entrée dans la cloison creuse 7 de la chambre 3 repérée CH3 sous la rampe de chauffe 16 aval, en raison de la consommation de l'oxygène due aux combustions par les injecteurs amonts, identifiés INJ1, INJ3 et INJ5 (analogues à l'injecteur 30a de la figure 3), et les injecteurs avals repérés INJ2, INJ4 et INJ6 (analogues à l'injecteur 30b de la figure 3), qui alimentent en combustible gazeux les 3 cloisons creuses 7 des 3 chambres CH1, CH2 et CH3, chacune sous l'une respectivement des 3 rampes de chauffe 16. Dans la deuxième chambre de chauffe CH2, la teneur en O₂ se situe entre environ 15% et environ 5% et dans la troisième chambre de chauffe CH3, la teneur en O₂ se situe entre environ 5% et environ 10%. Puis, dans la traversée des chambres de numéros 3, 2 puis 1, qui est la chambre d'aspiration ASP, la teneur en oxygène remonte jusqu'à environ 12 à 13% au niveau de la pipe d'aspiration 14.

Les valeurs moyennes typiques du taux d'oxygène O₂ dans les fumées et gaz de combustion, le long d'une ligne de cloisons creuses 7, étant ainsi données par la figure 9, il est avantageux, selon l'invention, de moduler les durées d'impulsion d'ouverture dp des injecteurs 30, pour chaque rampe de chauffe 16 et pour chaque cloison creuse 7 du four 1, en fonction de la position de chaque injecteur 30 dans la zone de chauffage forcé du four, de façon à adapter le profil de flamme en fonction du taux d'oxygène contenu dans le volume de la travée d'injection correspondante, telle que 37 de la figure 7, et favoriser la limitation des NOx produits.

Pour cette raison, la formule (1) précédemment indiquée et exprimant la durée d'impulsion dp permet de définir cette durée d'impulsion en fonction du taux d'oxygène O₂ présent dans un flux de gaz comburant entrant dans une cloison creuse 7, lequel taux d'oxygène dépend de la position de l'injecteur 30, dans la zone de chauffage forcé, de sorte à favoriser la saturation de l'oxygène contenu dans le volume tel que 35 de la figure 5, à l'intérieur d'un volume tel que 36 de la figure 5, ou tel que 38 de la figure 7 qui correspond à une fraction du volume de la travée d'injection correspondante pour, simultanément, limiter la formation des NOx en favorisant le développement de la flamme le long de la travée d'injection telle que 37 de la figure 7.

Cette formule (1) qui définit la durée d'impulsion dp est donnée par la multiplication de trois termes, dont l'un est le rapport VT/X correspondant à la fraction considérée du volume de la travée d'injection, dont un autre est le rapport du taux d'oxygène sur 20% : O₂/20%, et dont le troisième est le rapport du coefficient 3600 au produit du débit nominal de l'injecteur Qg (en Nm³/h) par Vaₒ qui est le pouvoir comburivore du combustible gazeux utilisé, (en Nm³/Nm³ gaz), et qui vaut typiquement 10 lorsque le combustible gazeux est le gaz naturel, pour une durée d'impulsion dp exprimée en seconde.

Toutefois, selon l'invention, on détermine une durée maximale d'impulsion d'ouverture de chaque injecteur 30, en définissant un seuil admissible de concentration en CO en sortie de la cloison creuse 7 correspondante. A titre d'exemple, ce seuil peut être de 30 ppm.

Pour simuler les conditions réelles d'injection de combustible gazeux dans une cloison creuse 7 d'un four 1 à cuire, et ainsi pouvoir paramétrer la mise en oeuvre du procédé de l'invention, et en particulier paramétrer les commandes des injecteurs 30, notamment la vitesse d'injection du combustible gazeux en sortie d'injecteur, le débit nominal de l'injecteur et ses durées d'impulsion d'ouverture, un banc d'essai tel que schématiquement représenté sur la figure 10 peut être avantageusement utilisé.

Ce banc d'essai comprend une chambre d'essai 40 avec une paroi réfractaire 40a, de forme générale parallélépipédique par exemple, dans la paroi supérieure de laquelle peut être implanté un injecteur 30, apte à ainsi injecter un jet vertical de combustible gazeux dans une travée d'injection délimitée, à l'intérieur de la chambre 40, entre un côté vertical de la paroi 40a et entre un côté vertical de la paroi 40a et une chicane verticale 40b. En amont de la chambre d'essai 40, une chambre 41 de précombustion a pour fonction principale d'ajuster le taux d'oxygène du gaz comburant passant de cette chambre 41 de précombustion à la travée d'injection dans la chambre d'essai 40 à l'aplomb de l'injecteur 30, et cette chambre 41 de précombustion est équipée notamment d'un ensemble de capteurs permettant de qualifier les gaz entrants. Ces capteurs comprennent notamment un capteur de pression 43, un capteur 44 de la température ambiante dans le gaz, un capteur 45 de température du gaz par aspiration, et d'un analyseur de gaz 46. Dans la chambre d'essai 40, les gaz et fumées de combustion résultant de la combustion du combustible gazeux injecté en co-courant par l'injecteur 30 et du gaz comburant provenant de la chambre 41 de précombustion s'écoulent sous l'extrémité inférieure de la chicane 40b pour remonter vers le haut dans la moitié de droite de la chambre d'essai 40, d'où ces gaz et fumées de combustion sortent pour entrer dans une chambre 42 de collecte des gaz, ainsi en aval de la chambre d'essai 40, et destinée au refroidissement des gaz et fumées avant extraction par une cheminée, cette chambre 42 de collecte étant également équipée notamment de capteurs permettant de qualifier les fumées sortantes, et en particulier d'un capteur de pression 43, d'un capteur de température 44, d'un capteur 45 de température des gaz et fumées par aspiration et d'un analyseur de gaz 46. Dans la chambre d'essai 40, du côté de la chicane 40b qui est tourné vers la sortie vers la chambre de collecte 42, la chambre d'essai 40 est également équipée d'un capteur de pression 43 et d'un capteur de température 44.

Enfin, des capteurs de température supplémentaires équipent la chambre d'essai 40 et sa paroi réfractaire 40a, et notamment un capteur de température 44 mesurant la température dans la flamme, un capteur de température 47 effectuant 3 mesures de températures, dont une à coeur dans la paroi 40a, une autre en face interne de cette paroi 40a et une troisième en face externe de cette paroi, et enfin un autre capteur de température 48 mesurant également la température à coeur dans la paroi 40a. La chambre d'essai 40 est ainsi équipée d'un ensemble de capteurs permettant de mesurer non seulement les températures dans la cloison réfractaire 40a, mais également les teneurs en oxyde d'azote (NOx) en entrée et en sortie de cette chambre 40 ou cellule, ainsi que d'un ensemble d'actionneurs requis (non représentés) pour simuler les conditions réelles d'injection de combustible gazeux dans une cloison creuse de four à chambres destiné à la cuisson de blocs carbonés. Un tel banc d'essai permet de s'assurer que la production de NOx est faible et relativement constante pour des vitesses d'injection du combustible gazeux qui sont inférieures à 80 m/s, alors qu'elle est multipliée par environ 4 lorsque la vitesse d'injection passe de 80 m/s à sensiblement 160 m/s, comme indiqué par la figure 8.

## Revendications

1. Procédé d'injection pulsée de combustible gazeux au moyen d'au moins un injecteur (30) à au moins un orifice de sortie apte à délivrer au moins un jet de combustible gazeux, et placé dans un ouvreau (11) correspondant dans au moins une cloison creuse (7) d'un four (1) à chambres (3) du type dit "à feu tournant" destiné à la cuisson de blocs carbonés, **caractérisé en ce qu'**on donne à la vitesse moyenne dudit combustible gazeux audit au moins un orifice de sortie dudit au moins un injecteur une valeur comprise entre 5 m/s et 80 m/s dans l'axe dudit au moins un jet.

2. Procédé selon la revendication 1, **caractérisé en ce que** ladite vitesse moyenne dudit combustible gazeux est comprise entre 10 m/s et 50 m/s dans l'axe dudit au moins un jet.

3. Procédé selon l'une quelconque des revendications 1 et 2, **caractérisé en ce que** le rapport du débit instantané Qg dudit combustible gazeux à un volume V (36) de ladite au moins une cloison creuse (7) situé à l'aplomb d'un injecteur (30) et compris entre la base (33) dudit ouvreau (11) correspondant et la base (34) d'une lucarne (8) de passage des gaz de ladite cloison creuse (7) est compris entre 65 et 130 Nm3/h/m3.

4. Procédé selon l'une quelconque des revendications 1 à 3, **caractérisé en ce que** le volume dudit combustible gazeux injecté lors d'une impulsion d'ouverture dudit au moins un injecteur (30) conduit, en début d'impulsion, à une saturation en combustible gazeux et une combustion incomplète dans une zone de mélange (35, 38)) de combustible gazeux et comburant par manque d'oxygène.

5. Procédé selon la revendication 4, **caractérisé en ce que** ladite combustion est rendue incomplète de sorte à conduire à la formation de suies carbonées.

6. Procédé selon l'une quelconque des revendications 3 et 4 ou 5 telle que rattachée à la revendication 3, **caractérisé en ce que** la durée d'une impulsion (dp) d'ouverture en secondes d'au moins un injecteur (30) est définie par la formule (1) : dp = (VT/X)x (O₂%/20%)x(3600 /(Qg x Vaₒ)), dans laquelle VT est le volume d'une travée d'injection (37) d'un injecteur (30) dans ladite cloison creuse (7), X représente un coefficient de réduction dudit volume de ladite travée d'injection (37) pour définir un volume (VT/X) (38) dans ladite travée d'injection (37) que l'on souhaite saturer en combustible gazeux, O₂% est le taux d'oxygène du volume comburant entrant dans ladite cloison creuse (7) et Vaₒ est le pouvoir comburivore dudit combustible gazeux, Qg étant le débit nominal de l'injecteur (30).

7. Procédé selon la revendication 6, **caractérisé en ce que** ledit coefficient X de réduction dudit volume VT de ladite travée d'injection (37) est compris entre 5 et 10.

8. Procédé selon la revendication 6, **caractérisé en ce que** ladite durée d'impulsion d'ouverture dp d'au moins un injecteur (30) est fixée pour chaque rampe de chauffage (16) et chaque cloison creuse (7) dudit four (1) en fonction de la position dudit injecteur (30) dans la zone de chauffage forcé (B) dudit four (1).

9. Procédé selon l'une quelconque des revendications 6 à 8, **caractérisé en ce que** la durée maximale d'impulsion d'ouverture dp d'au moins un injecteur (30) est définie par un seuil admissible de concentration en CO en sortie de ladite cloison creuse (7).

10. Procédé selon la revendication 9, **caractérisé en ce que** ledit seuil admissible de concentration en CO en sortie de ladite cloison creuse (7) est de 30 ppm.

## Patentansprüche

1. Verfahren zur gepulsten Gaskraftstoffeinspritzung mittels mindestens einer Einspritzdüse (30) mit mindestens einer Austrittsöffnung, die mindestens einen Gaskraftstoffstrahl abgeben kann und in einer entsprechenden Arbeitsöffnung (11) in mindestens einer Hohlwand (7) eines Ofens (1) mit Kammern (3), einem sogenannten "Ringkammeroffen", der zum Brennen von Kohlenstoffblöcken bestimmt ist, platziert ist, **dadurch gekennzeichnet, dass** man der mittleren Geschwindigkeit des Gaskraftstoffs an der mindestens einen Austrittsöffnung der mindestens einen Einspritzdüse in der Achse des mindestens einen Strahls einen Wert zwischen 5 m/s und 80 m/s zuordnet.

2. Verfahren nach Anspruch 1, **dadurch gekennzeichnet, dass** die mittlere Geschwindigkeit des Gaskraftstoffs in der Achse des mindestens einen Strahls zwischen 10 m/s und 50 m/s liegt.

3. Verfahren nach einem der Ansprüche 1 und 2, **dadurch gekennzeichnet, dass** das Verhältnis der momentanen Durchflussrate Qg des Gaskraftstoffs zu einem Volumen V (36) der mindestens einen Hohlwand (7), das sich in Flucht mit einer Einspritzdüse (30) befindet und zwischen der Basis (33) der entsprechenden Arbeitsöffnung (11) und der Basis (34) einer Luke (8) für den Durchgang der Gase der Hohlwand (7) liegt, zwischen 65 und 130 Nm3/h/m3 beträgt.

4. Verfahren nach einem der Ansprüche 1 bis 3, **dadurch gekennzeichnet, dass** das Volumen des bei einem Öffnungsimpuls der mindestens einen Einspritzdüse (30) eingespritzten Gaskraftstoffs zu Beginn des Impulses zu einer Gaskraftstoffsättigung und durch Sauerstoffmangel zu einer unvollständigen Verbrennung in einer Mischungszone (35, 38) aus Gaskraftstoff und brandförderndem Stoff führt.

5. Verfahren nach Anspruch 4, **dadurch gekennzeichnet, dass** die Verbrennung derart unvollständig wird, dass sie zur Bildung von Kohlenstoffruß führt.

6. Verfahren nach einem der Ansprüche 3 und 4 oder 5, sofern auf Anspruch 3 rückbezogen, **dadurch gekennzeichnet, dass** die Dauer eines Öffnungsimpulses (dp) in Sekunden mindestens einer Einspritzdüse (30) durch die Formel (1) dp = (VT/X) x (O₂%/20%) x (3600 / (Qg x Vaₒ)) definiert wird, wobei VT das Volumen eines Einspritzfeldes (37) einer Einspritzdüse (30) in der Hohlwand (7) ist, X einen Reduktionskoeffizienten des Volumens des Einspritzfeldes (37) darstellt, um ein Volumen (VT/X) (38) in dem Einspritzfeld (37), das man mit Gaskraftstoff sättigen möchte, zu definieren, O₂% die Sauerstoffrate des in die Hohlwand (7) eintretenden Volumens des brandfördernden Stoffes ist und Vaₒ das Sauerstoffverbrennungsvermögen des Gaskraftstoffs ist, wobei Qg der Nenndurchfluss der Einspritzdüse (30) ist.

7. Verfahren nach Anspruch 6, **dadurch gekennzeichnet, dass** der Reduktionskoeffizient X des Volumens VT des Einspritzfeldes (37) zwischen 5 und 10 liegt.

8. Verfahren nach Anspruch 6, **dadurch gekennzeichnet, dass** die Öffnungsimpulsdauer dp mindestens einer Einspritzdüse (30) für jede Heizrampe (16) und jede Hohlwand (7) des Ofens (1) in Abhängigkeit von der Position der Einspritzdüse (30) in der Zwangsheizzone (B) des Ofens (1) festgelegt wird.

9. Verfahren nach einem der Ansprüche 6 bis 8, **dadurch gekennzeichnet, dass** die maximale Öffnungsimpulsdauer dp mindestens einer Einspritzdüse (30) durch eine zulässige Schwelle der CO-Konzentration beim Austritt aus der Hohlwand (7) definiert wird.

10. Verfahren nach Anspruch 9, **dadurch gekennzeichnet, dass** die zulässige Schwelle der CO-Konzentration beim Austritt aus der Hohlwand (7) 30 ppm beträgt.

## Claims

1. Method for pulsed injection of gaseous fuel by means of at least one injector (30) in at least one outlet adapted to deliver at least one jet of gaseous fuel, and positioned in a corresponding peephole (11) in at least one hollow partition (7) of a chamber (3) type ring furnace (1) said to have "advancing fires" and intended for baking carbonaceous blocks, **characterized in that** the average speed of said gaseous fuel at said at least one outlet of said at least one injector is given a value of between 5 m/s and 80 m/s on the axis of said at least one jet.

2. Method according to claim 1, **characterized in that** said average speed of said gaseous fuel is between 10 m/s and 50 m/s on the axis of said at least one jet.

3. Method according to any one of claims 1 and 2, **characterized in that** the ratio of the instantaneous flow rate Qg of said gaseous fuel to a volume V (36) of said at least one hollow partition (7) located in alignment under an injector (30) and contained between the base (33) of said corresponding peephole (11) and the base (34) of a port (8) allowing the passage of gases from said hollow partition (7) is between 65 et 130 Nm3/h/m3.

4. Method according to any one of claims 1 to 3, **characterized in that** the volume of said gaseous fuel injected during an open pulse of said at least one injector (30) leads, at the beginning of the pulse, to gaseous fuel saturation and incomplete combustion in the area (35, 38) for mixing gaseous fuel and oxidant, due to lack of oxygen.

5. Method according to claim 4, **characterized in that** said combustion is rendered incomplete so as to lead to the formation of soot.

6. Method according to any one of claims 3 and 4 or 5 as dependent on claim 3, **characterized in that** the open pulse duration (dp) in seconds of the at least one injector (30) is defined by formula (1): dp = (VT/X)x (O₂%/20%)x(3600 /(Qg x Vaₒ)), where VT is the volume of an injection space (37) of an injector (30) in said hollow partition (7), X represents a volume reduction coefficient for said injection space (37) in order to define a volume (VT/X) (38) in said injection space (37) that it is desired to saturate with gaseous fuel, O₂% is the level of oxygen in the volume of oxidant entering said hollow partition (7), and Vaₒ is the stoechiometric volume of air required for a complete combustion of said gaseous fuel, Qg being the nominal flow rate speed of the injector (30).

7. Method according to claim 6, **characterized in that** said volume reduction coefficient X for said volume VT in said injection space (37) is between 5 and 10.

8. Method according to claim 6, **characterized in that** said open pulse duration dp of at least one injector (30) is fixed, for each heating ramp (16) and each hollow partition (7) of said furnace (1), as a function of the position of said injector (30) in the forced heating area (B) of said furnace (1).

9. Method according to any one of claims 6 to 8, **characterized in that** the maximum open pulse duration dp of at least one injector (30) is defined by a threshold for the admissible concentration of CO at the exit from said hollow partition (7).

10. Method according to claim 9, **characterized in that** said threshold for the admissible concentration of CO exiting said hollow partition (7) is 30 ppm.
